# EUROPEAN PATENT SPECIFICATION

(11) **EP 0 282 070 B1**
(45) Date of publication and mention of the grant of the patent: **03.08.1994**
(21) Application number: 88103867.3
(22) Date of filing: 11.03.1988
(51) Int. Cl.: G06F 12/06, G06F 12/02

(54) **Vector access to memories**
Vektorzugriff auf Speicher
Accès vectoriel à des mémoires

(30) Priority: 13.03.1987 JP 59484/87
(43) Date of publication of application: 14.09.1988
(73) Proprietor: FUJITSU LIMITED, Kawasaki-shi, Kanagawa 211 (JP)
(72) Inventor: Ikeda, Masayuki c/o Fujitsu Limited Patent Depart., Nakahara-ku Kawasaki-shi Kanagawa 211 (JP)
(74) Representative: Sunderland, James Harry

(56) References cited:
- EP-A- 0 146 943
- FR-A- 2 222 698
- THE 13TH ANNUAL INTERNATIONAL SYMPOSIUM ON COMPUTER ARCHITECTURE, Tokyo, 2nd-5th June 1986, pages 324-327, IEEE, Washington, US; D.T. HARPER III et al.: "Performance evaluation of vector accesses in parallel memories using a skewed storage scheme"

## Description

The present invention relates the vector accessing of memories, for example in a memory device used in a vector processor, and more particularly concerns the constant stride accessing of the memory device.

In recent high speed vector processors, a main memory device is divided into a plurality of memory banks, enabling parallel access thereto in order to decrease the total access time to many data items, and to provide a fail-soft structure for the memory device, that is, to minimize destruction should a failure occur.

Data stored in a memory device is accessible by indicating in a program address numbers of memory cells where desired data items are stored. In order to make access to a plurality of data items which are stored in memory cells having contiguous address numbers, it is not necessary to indicate all of the addresses (address numbers) in a program. The computer is provided with an address generator which outputs successively the necessary addresses when a starting address and an end address are given, or a starting address and a length of an address chain are given. So, data is automatically read out or stored in succession. A group of addresses in which data is stored in such a manner is called in the art a vector address, and a method of making access to such data is called a vector access.

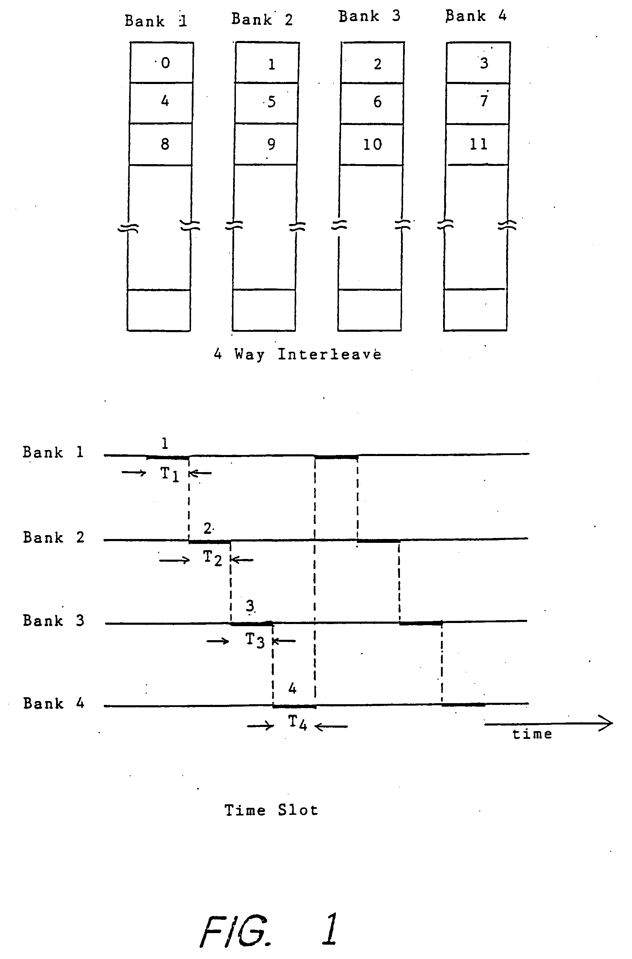

When the memory device has a plurality of memory cells arranged in several banks, each of the memory cells stores a data element or item and each of the memory locations or cells is numbered. This number is called an address number or address index. The numbering is interleaved through all the banks, in a manner as illustrated in upper half of Fig. 1. Namely, the memory cells are numbered from the first row of the first bank, then to the first row of the second bank and then the first row of the third bank, and so on. When the first row of the final bank has been numbered, the second rows of the banks are numbered in succession. In Fig. 1 only four banks are shown, and the numbering, therefore, is four-way interleaved. In general a memory device is provided with many banks, depending on the size of memory afforded by the device. So, if the memory device is provided with n banks, the addresses are n-way interleaved, and n numbers are used to identify the individual banks, each number being called a bank number or bank index.

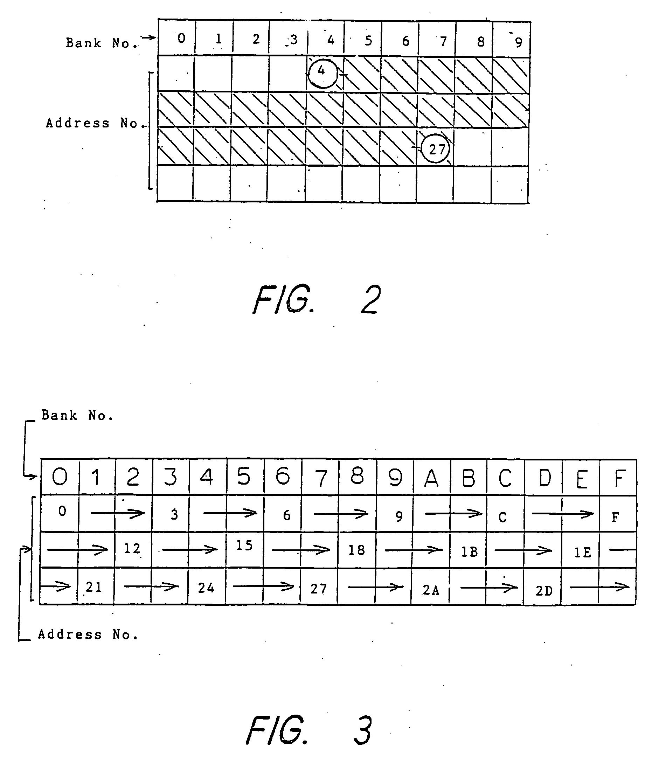

An example of a vector access is illustrated in Fig. 2. When a first address (4 in this example) and an end address (27) are given, an address generator outputs all of the address indices indicated by hatching in Fig. 2 in succession, in order of address number. The data stored in these memory cells is accessed. The hatched area is a vector address. Such an address may be called more particularly a contiguous vector address or a sequential address, and a procedure for accessing such an address is called a contiguous vector access or a sequential access.

However, in practice in data processing, it often occurs that it is necessary to make access to data items which are stored in memory cells which have indices skipping or separated by a constant number. An example is shown in Fig. 3. In this example, the number of banks is 16, so address numbers are 16-way interleaved. In the Figure, the desired addresses are 0, 3, 6, 9, C, F ... (These numbers being expressed as hexa-decimal numerals). They are stored at addresses between which two addresses are skipped, or at addresses separated by two addresses. The difference between the address numbers of neighbouring desired addresses is called the distance, or stride. In the above example, therefore, the distance is three. A sequence of addresses of this kind is called in the art a distanced vector address or a constant stride address, and a procedure for accessing such an address (address sequence) is called a distanced vector access or a constant stride access.

A procedure for accessing a memory which includes indicating all addresses one by one in a program is called sometimes a scalar access.

A requirement for distanced vector access often occurs in processing of vectors or in matrix processing. Of course there are many cases other than matrix processing which call for distanced vector access. A process for distanced vector access will be explained briefly, using matrix processing as an example. Consider a matrix of m rows and n columns such as:- 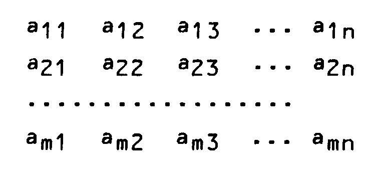
the data elements aₘₙ are usually arranged in accordance with the sequence of their column index n or their row index m, and they are stored in respective addresses of a memory device in order of element index mn. If it is desired to make access to data elements in order of column index n, that is in accordance with the succession a₁₁, a₁₂, a₁₃ ..., contiguous vector access as mentioned above is convenient. However, if it is desired to make access to data elements in order of row index m, that is in accordance with a₁₁, a₂₁, a₃₁ ..., distanced vector access is needed.

A memory device is provided with a bank controller which controls access to each of the banks or allots priority to accesses. Whilst one bank is being accessed from one processor, the bank controller prohibits further access to this bank, and when the access to this one bank is complete, the bank controller enables another processor to access this one bank. Such bank controllers have been provided in respect of each bank, but as the number of banks increased, the cost of the hardware increased. Therefore, for modern processors, various proposals for bank control have been made with a view to reducing the number of bank controllers and to providing a more economical memory device.

One example of a proposal for bank control involves allotting a time slot to each bank during which time slot access to the bank concerned is allowed, and the time slot is shifted from one bank to another in sequence. For example, as shown in the lower half of Fig. 1, access to bank 1 is allowed only in time period T₁, during this time period access to other banks is forbidden. In a next time period T₂, bank 2 is enabled, and other banks are forbidden. In the following time period T₃, only bank 3 is enabled. In similar manner, all of the banks are enabled sequentially one by one. This is called sequential bank control.

Another proposal involves grouping of banks, an access controller being provided for each bank group. For example, 12 banks may be grouped into four groups each having three banks. A bank controller checks the three banks in respect of which it is provided, and if one of the banks in the group is responding to an access, it forbids further access to the group. The description below will refer to sequential bank control, but it will be apparent for one skilled in the art that the discussion can be applied to any such bank control method as mentioned above.

An example of how data stored in the addresses of a distance vector address have previously been accessed will be described. Fig. 3 is an address chart illustrating a sixteen-way interleave and distance of three. When banks are enabled one by one to respond to an access within a predetermined time slot, in this case data in address 0 in bank 0 is first accessed during a first time slot.

In the description hereinafter, both a memory cell having an address number and the data stored in the cell will be referred to simply as an address, unless it is specifically indicated or apparent that this is not intended. So, "access to an address" means access to data stored in a memory cell having an appropriate address number.

The next address to be accessed is 3 in bank 3, but processor is forbidden to access bank 3 during the next two time slots (after access to address 0). Only in the fourth time slot is address 3 in bank 3 accessed. Similarly, when one address has been accessed, the following two time slots are skipped without accessing any bank. In the above example, therefore, only one address is accessed for every three time slots, in the data sequence 0, 3, 6, 9, C, and F. Then the addresses 12, 15, 18, 1B ... are accessed in succession. This procedure is repeated until all of the distanced vector addresses have been accessed.

As can be understood from the above explanation, access to each of the data elements in a vector address is accomplished during only one of several time slots covering one distance or stride of the address. So, total access time to a distanced vector address is long. In the example of Fig. 3, 48 time slots are necessary to access 16 addresses. Generally, the throughput of a memory device decreases approximately to 1/D when it is accessed in accordance with distanced vector address having a distance D, compared to the throughput when it is accessed in accordance with a contiguous vector address having the same number of data elements.

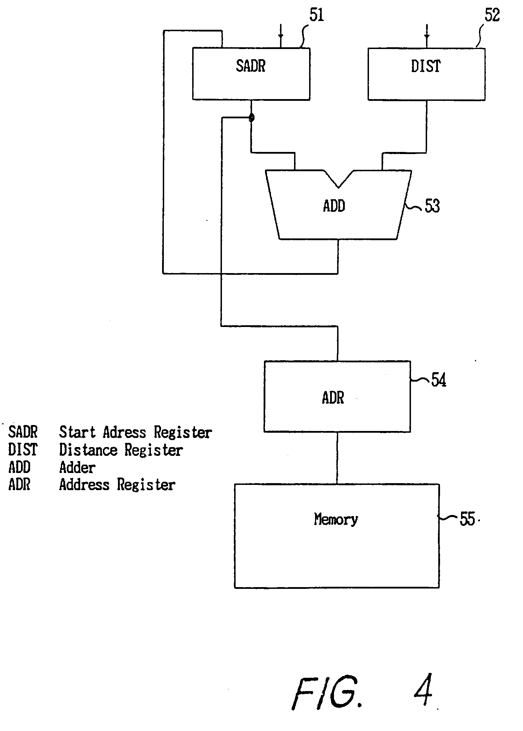

The reason for this inconvenience can be attributed to the address generator. In previously proposed address generators, addresses are generated in order of address indices. Namely, in the case of Fig. 3, the addresses are generated in the order 0, 3, 6 ... 2A and 2D. Therefore, a processor has to wait several time slots before it can access a next address. An exemplary circuit configuration of a previously proposed address generator is shown in Fig. 4. In this Figure, a start address is set in a start address register (SADR) 51 and a distance is set in a distance register (DIST) 52. In the case of Fig. 4, the value of the distance (e.g. 3) is added to the start address (e.g. 0) by an adder (ADD) 53, producing a new address number 3. This number is registered in an address register (ADR) 54 via the register 51. Then, the distance 3 is again added to the address number 3, producing a new address number 6, and so on. In such a manner, new addresses are generated one after another in address index order. Accordingly, the addresses 0, 3, 6, 9, C, F, 12, 15, ....., are obtained in sequence. These generated addresses are stored in the address register 54 for a while, and accessing to memory 55 is carried out.

It will be understood that constant stride access to a memory using such an address generator takes a very long time. This represents a significant disadvantage for processing speed in a high speed vector processor.

According to the present invention there is provided apparatus operable to perform a constant stride vector access to a constant stride vector address of a memory device, the vector address having a starting address and a distance or stride, the memory device having a plurality of memory banks numbered with respective bank indices, and individual addresses of the memory device being numbered with respective address indices interleaved through the memory banks, the apparatus including an address generator, operable to generate successive address indices of the constant stride vector address, comprising:
generating means for generating a sequence of first numbers of which the first one is zero and which differ from each another by a value computed in accordance to an equation

$\text{c x D = 1 (mod B)}$

where B and D are positive integers coprime to each other, B being the number of banks of the memory device and D being the said distance or stride of the vector address, or B being the number of banks and D the stride after division by the greatest common factor of the number of banks and the stride, and c being a positive integer called a delta index;
correction means operable such that said address indices are generated on the basis of said first numbers referred to modulus B x D; and
adding means coupled to said correction means and to a starting address index register so that the generated address indices are based on the starting address index.

According to the present invention there is also provided a method of performing a constant stride vector access to a constant stride vector address of a memory device, the vector address having a starting address and a distance or stride, the memory device having a plurality of memory banks numbered with respective bank indices, and individual addresses of the memory device being numbered with respective address indices interleaved through the memory banks, the method comprising generating successive address indices of the constant stride vector address, by:-
(a) generating a sequence of first numbers of which the first one is zero and which differ from each another by a value computed in accordance to an equation

   $\text{c x D = 1 (mod B)}$

   where B and D are positive integers coprime to each other, B being the number of banks of the memory device and D being the said distance or stride of the vector address, or B being the number of banks and D the stride after division be the greatest common factor of the number of banks and the stride, and c being a positive integer called a delta index;
(b) effecting correction such that said address indices are generated on the basis of said first numbers referred to modulus B x D; and
(c) adding a value based on the starting address index so that the generated address indices are based on the starting address index.

In accordance with embodiments of the present invention, higher speed access to constant stride addresses can be provided.

An embodiment of the present invention can realize this higher speed access using equipment with ordinary hardware.

Employment of embodiments of the present invention can provide for improved throughput of a memory device under vector access.

In accordance with an embodiment of the present invention addresses are generated in the order of memory banks which are enabled for access.

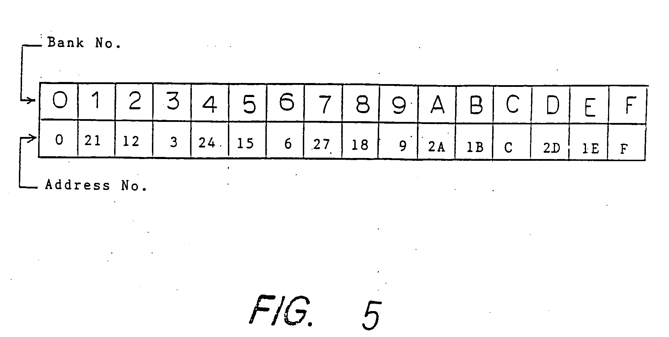

An embodiment of the present invention provides an address generator with which addresses are generated not in order of address index, but in order of bank index to be accessed. For instance, addresses for accomplishing the vector access of the example of Fig. 3 are generated in the sequence 0, 21, 12, 3, 24, 15, 6 ..., as illustrated in Fig. 5. In this way memories are accessed without skipping banks. So, there is no waiting time in the memory device for the skipping of banks. Therefore, total access time for D distant vector addresses is reduced to approximately 1/D of the access time previously required.

In short, embodiments of the invention provide for the output of the address numbers of a distant vector address, arranged not in order of the address index but in order of the bank index. An address generator is provided which outputs successively such address numbers.

The advantages of the present invention are, therefore, of value particularly in relation to so called super computers, which have high processing performances for carrying out scientific and technical calculations.

Reference is made, by way of example, to the accompanying drawings in which:-
- Fig. 1: is a schematic diagram illustrating how address numbers are interleaved in memory banks, and how these banks are accessed in accordance with a time slot sequence,
- Fig. 2: is an address chart illustrating how a contiguous vector address is stored in a memory device having plurality of memory banks,
- Fig. 3: is an address chart illustrating a distanced vector address stored in memory banks,
- Fig. 4: is a schematic block diagram of a previously proposed address generator,
- Fig. 5: is an example of vector address which is arranged in the order of bank indices,
- Fig. 6: is a schematic block diagram illustrating part of an address generator for accomplishing a distanced vector access in accordance with an embodiment of the present invention,
- Fig. 7: is an address chart illustrating an example of a distanced vector address of considerable length,
- Fig. 8: is a schematic block diagram illustrating an example of an address correction circuit employed in an address generator in accordance with an embodiment of the present invention,
- Figs. 9 and 10: are schematic block diagrams of parts of further address generators for accomplishing distanced vector accesses in accordance with embodiments of the present invention,
- Fig. 11: is a schematic block diagram illustrating a modification of the address correction circuit shown in Fig. 8, to be applied to the generator of Fig. 10,
- Fig. 12: is a schematic block diagram illustrating an example of a divider circuit which may be used in an address generator in accordance with an embodiment of the present invention,
- Fig. 13: is a flow chart relating to the divider circuit of Fig. 12,
- Fig. 14: is a schematic block diagram illustrating the overall configuration of an address generator in accordance with an embodiment of the present invention,
- Fig. 15: is a flow chart relating to the address generator of Fig. 14,
- Fig. 16: is an example of a DISTANCE - DELTA chart, and
- Fig. 17: is an address chart of a distanced vector address corresponding to a case in which values of B and D are not coprime to each other.

Throughout the Figures, the same reference numerals designate and identify the same or similar parts.

For understanding the present invention it is useful to note the following mathematical considerations. What is known as the Euclidian Algorithm, or the method of mutual division, indicates that if integers B and D are coprime to each other, there exist positive integers a and c satisfying the following equation

$\text{a.B + c.D = 1 (mod B)}$

The right side of the equation means a number which is an integral multiple of B plus 1, or, in other words, if this number is divided by B it leaves a remainder of 1. The number B is known as the modulo or modulus. Therefore, the equation means there is a combination of numbers a.B and c.D which has a remainder of 1 if it is divided by B.

Since a.B is a multiple of B, equation (1) can be simplified to

$\text{c.D = 1 (mod B)}$

The number c is called the delta index hereafter.

An embodiment of the present invention makes use of this relationship. Namely, if B is an address interleave number, that is, if B is the number of banks, and D the distance or stride between addresses of a constant stride vector address, a number c (positive integer) can be obtained which makes a multiple of D by c larger by 1 than a multiple of the interleave number B. This means that, starting from any address in any bank, if the address is increased by a number which is c times the distance D, the resulting address number is one which belongs to a bank next indexed to the initial bank.

The significance of the above relationship will become more apparent from the following example. Let the interleave number B be 128, and the distance D be 7. This means the example relates to a large memory device having 128 banks. The following relationship can be obtained

$\text{55 x 7 = 3 x 128 + 1}$

Therefore, c = 55. This means that if addresses in a (any) bank are skipped 55 times with a stride of 7, the new address is positioned in (relates to) a bank which is next to the initial bank.

This may be further explained as follows. If the elements (individual addresses) of a distanced vector address are designated by V(i), where i is a vector index (i= 1, 2, 3, 4, 5,... etc.), and the starting address of the vector address is indicated by s, then the address numbers of the elements are given by

$\text{s + (i - 1)D.}$

For instance, if s = 1, and the stride D = 7 as in the above example, the address numbers are 1, 8, 15, ..... (which addresses are found in banks 1, 8, 15, ..... etc.).

In previous proposals, the elements are accessed in this order, i.e. address number order, for example bound by a maximum address number B x D. In other words they are accessed in order of vector indexes i = 1, 2, 3, 4, .... etc., bound by a maximum index B.

In an embodiment of the present invention, however, the elements in this example are accessed in a different order of vector indexes, corresponding to a series as follows

$\text{i = 1 + p x c (mod B)}$

where p = 0, 1, 2, 3, 4, 5, .... etc..

That is, in terms of the above example, the elements are accessed in order of vector indexes 1, 56, 111, .... etc..

This corresponds to accessing individual addresses in the order of address numbers

$\text{s + (p x c x D) (mod B x D)}$

where p = 0, 1, 2, 3, 4, 5, .... etc..

In terms of the above example this corresponds to the order 1, 386, 771, .... etc..

This means that the accesses are in bank index order SB, SB + 1, SB + 2, SB + 3, ..... etc., where SB is the bank index of the bank holding the starting address.

So, if the bank index of a bank which includes an address corresponding to vector index i is written as FB(i), the starting address of the vector address is 1, and the bank index of the starting bank which includes the starting address is written as SB, the relation between the indices of above example becomes 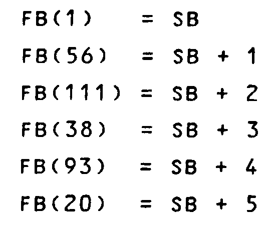 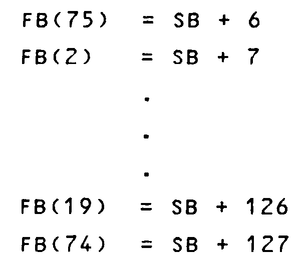
Therefore, if the vector indices (or address indices corresponding to the vector indices) 1, 56, 111, 38, 93 ... are generated successively, a quick access to the vector address is possible, because there is no need to wait for banks to be skipped after accessing one address before accessing a next address.

Next, operation of an address generator in accordance with an embodiment of the present invention, to output address indices in order of bank index, will be explained. The explanation will be based, for better understanding, on a case in which address numbers as shown in Fig. 5 are output.

In this case, the number of banks (the interleave number) B is taken to be 16 and the distance D is taken to be 3. So, one solution of the equation (2) is c = 11, that is

$\text{11 x 3 = 2 x 16 + 1}$

This means that if the address number is increased by 11 x 3 (= 33), it becomes equal to the sum of an integral multiple of the interleave number and unity. Therefore, the bank index number of the bank which includes that address is increased by 1.

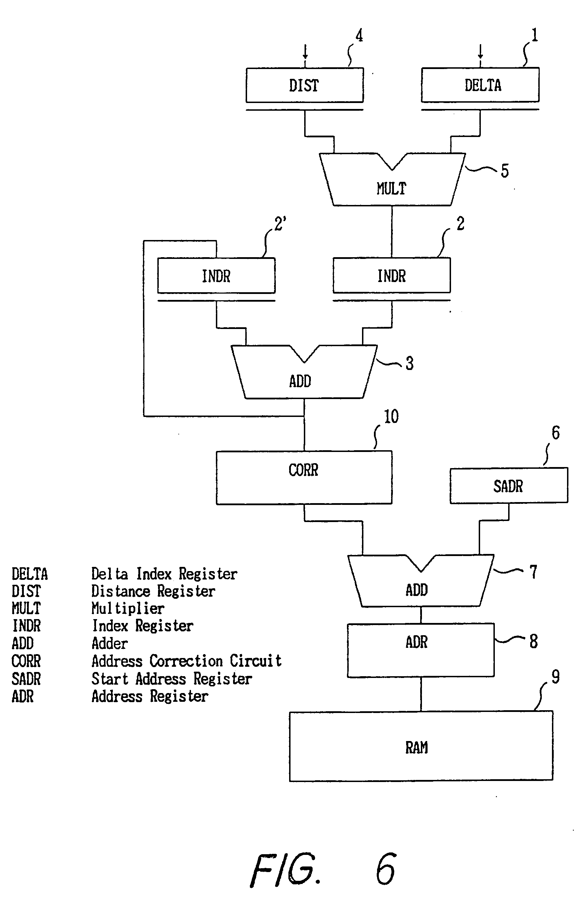

Fig. 6 is a block diagram illustrating in outline an address generator in accordance with an embodiment of the present invention, which generator operates according to the above described logic. The value of c (= 11 in the example of Fig. 5) is set in a delta index register (DELTA) 1, and the distance D (= 3) is set in a distance register (DIST) 4. These values are multiplied together by a multiplier (MULT) 5 and sent to a first index register (INDR) 2. There is provided a second index register (INDR) 2ʹ which is set to zero at a starting time. The values in the first and second index registers 2, 2ʹ are added to each other by an adder (ADD) 3, the output of which is fed back to the second index register 2ʹ, and the value in the second register 2ʹ is replaced by the number output from the adder 3. Accordingly, the output of the adder 3 becomes successively 0, 33, 66, 99, ... When a starting address number is added to these numbers, they correspond to required address numbers.

The outputs of the adder 3 correspond to the required addresses, but they are not exactly the required addresses. As can be seen from Figs. 3 and 5, the outputs should be replaced by numbers having a modulus of B x D. This correction is achieved in an index correction circuit (CORR) 10 in the block diagram of Fig. 6. The function and configuration of the index correction circuit 10 will be described below.

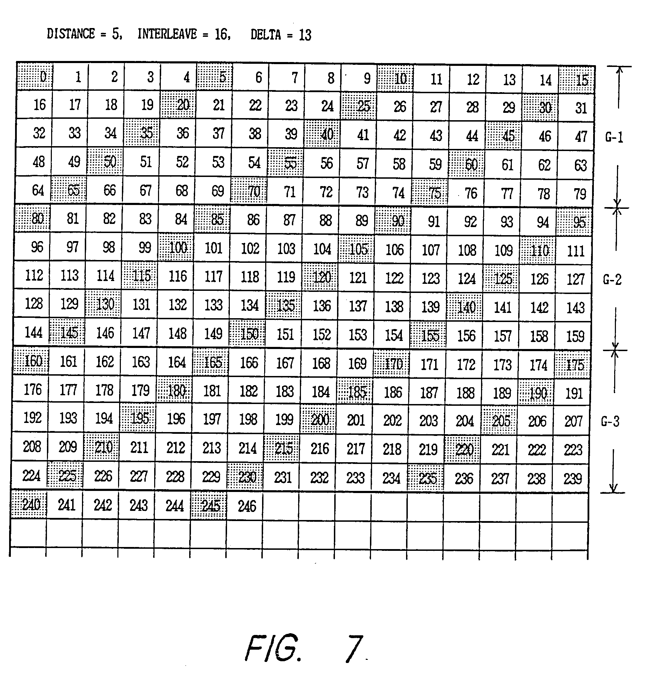

Fig. 7 is a chart of addresses in a memory device having 16 banks (B=16). An access is required which involves a skip or distance of 5 addresses. Therefore, the distance D is 5. The delta index c is calculated from equation (2) as 13. In the chart, the required addresses are identified by shading. Since c x D = 65, the adder 3 of Fig. 6 outputs successively 0, 65, 130, 195 .... With these outputs, addresses such as 50, 35, 20 etc. would not be obtained. Therefore, the outputs of the adder 3 must be corrected to turn back to the initial index when the output indices exceed a maximum index of (B x D), that is 80 in this example. In effect, the outputs of adder 3 should wrap round from the maximum index (80) to the initial index (e.g. 0). That means the indices (the outputs of adder 3) should be replaced by R(mod y) where y is the maximum index. That is 80 in this example.

If required addresses have a maximum address of 200 for example, the output address indices should be replaced by $\text{R(mod (B x C x D))}$ , that is in this example, R(mod 1040), and address indices exceeding 200 should be neglected.

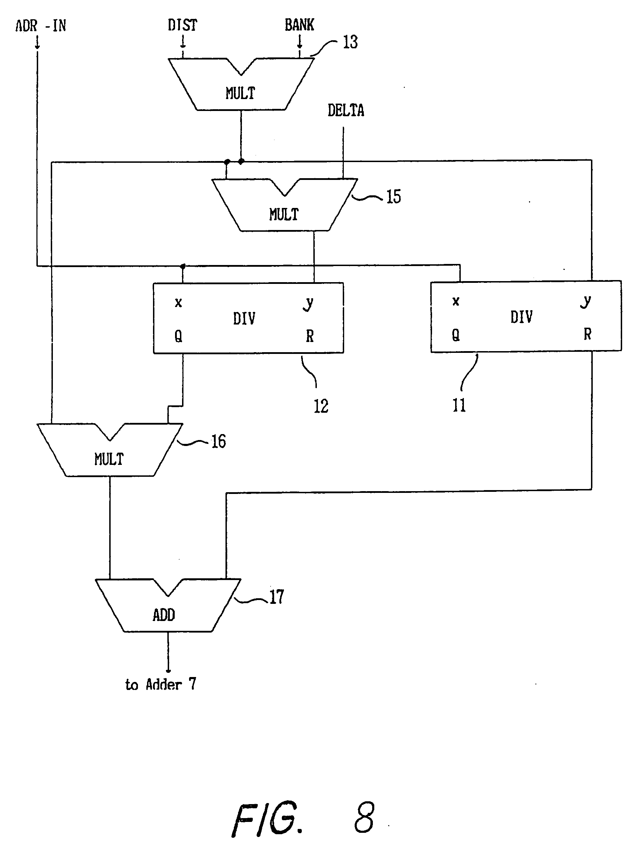

The address correction circuit 10 in Fig. 6 which performs the above functions is illustrated in Fig. 8. The correction circuit contains two dividers 11 and 12. The dividers each perform following operation.

$\text{x ÷ y = Q and R (3)}$

where Q is the quotient and R is the remainder. This relation can be written as

$\text{x = y x Q + R (4)}$

or using the modulo, it may be replaced by

$\text{x = R (mod y) (5)}$

The configuration of a divider will be explained later.

The output of the adder 3 (address indices) in Fig. 6 are successively fed to a terminal ADR-IN and fed to respective x terminals of the dividers 11 and 12 in Fig. 8. The values of c, B and D are applied respective terminals DELTA, BANK and DIST. These notations, written in capital letters, will be used also to designate the values applied to the respective terminals hereinafter. In the following description, the case of Fig. 7 will be referred to as an example. Referring to Fig. 7, it will be apparent that the first group of indices which are denoted as G-1 in the chart are obtained if ADR-IN is replaced by R(mod 80). This means in general that the ADR-IN (x) should be replaced by

$\text{R(mod y) where y = B x D (6)}$

This operation is carried out by the first divider 11 in Fig. 8. In Fig. 8, the y terminal of the divider 11 is supplied from a multiplier 13 which provides B × D (16 x 5 = 80). Accordingly, the divider 11 outputs successively 0, 65, 50, 35, 20 ...

Inspecting Fig. 7, it will be understood that the second group of indices which are denoted as G-2 can be obtained respectively by adding 80 (= B x D) to the corresponding indices of the first group. The third group of the indices denoted as G-3 can be obtained by adding 160 (=80 x 2) to the corresponding first group indices. It will be apparent that succeeding indices can be obtained in a similar manner, adding a number $\text{B x D x Q}$ to each of the indices of the group one.

Such operation is effected by the second divider 12, third and fourth multipliers 15, 16 and an adder 17. In Fig. 8. the divider 12 performs an operation

$\text{x/y = ADR-IN/(c x B x D) = Q and R}$

The second multiplier 15 provides $\text{B x D x c (=16 x 5 x 13 = 1040)}$ 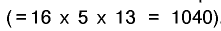 . This number is the value of x (= ADR-IN) corresponding to an index 80 in Fig. 7. Therefore, for all indices in the first group G-1, the value of x is smaller than 1040, in the example of Fig. 7. Therefore, the second divider 12 outputs 0 as the quotient Q. For the second group G-2 of the indices,the value of x becomes equal to or larger than 1040 and less than 2080 (=2 x 1040). So the second divider outputs 1 for the quotient Q. Similarly for the third group G-3 of indices it will become apparent from careful inspection of Fig. 7, that x values are between 2080 and 3120. So Q becomes 2.

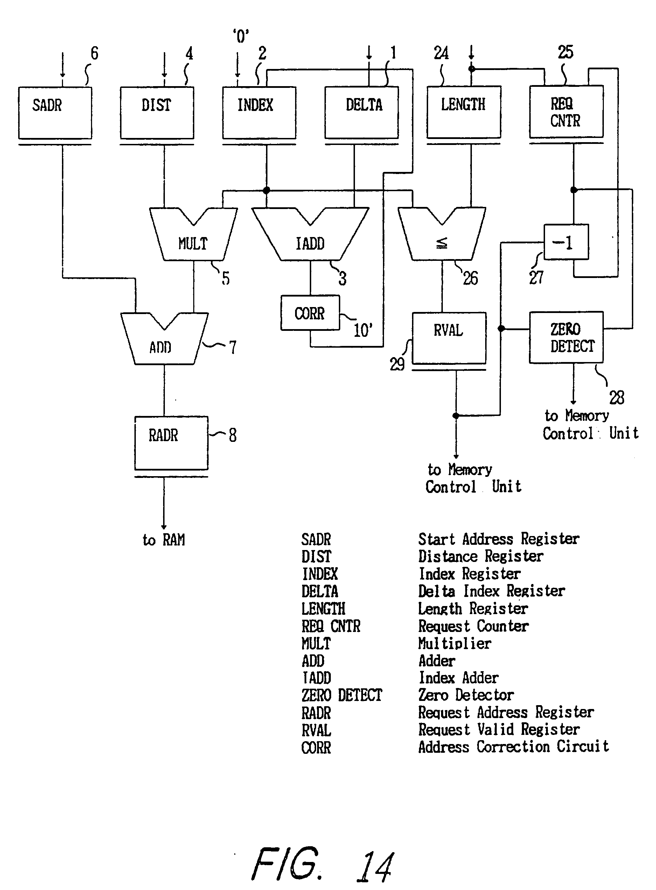

In Fig. 8, the third multiplier 16 multiplies the value of B x D (= 80) by Q (=0, 1, 2 ...). This is added by the adder 17 to the first group indices outputted from the R terminal of the first divider 11. Thus the address numbers for any size (length) of data are obtained. A process for stopping index generation above a maximum index (200 for example) will be discussed later with respect to total configuration of an address generator as shown in Fig. 14.

Referring back to Fig. 6, the starting address is set in a start address register (SADR) 6, and added to the output of the address correction circuit (CORR) 10 by a second adder 7. The output of the second adder 7 is registered in an address register (ADR) 8 as the requested address, and the data stored in the RAM 9 is accessed by this new address.

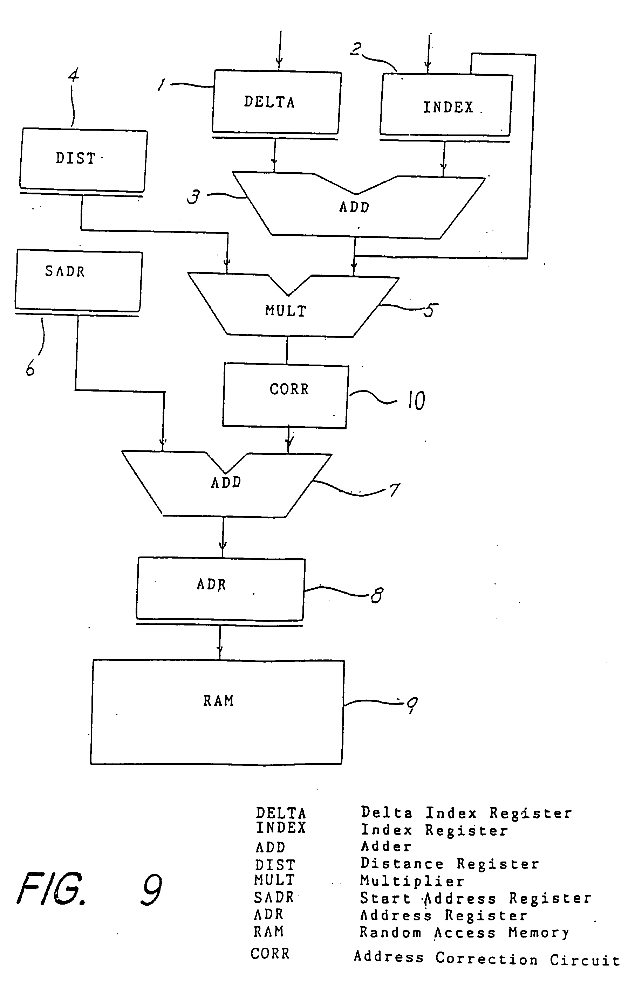

Address generation as described above can be modified in various ways. Fig. 9 illustrates another address generator in accordance with an embodiment of the present invention, corresponding to a modification of Fig. 6. Compared with Fig. 6, the generator of Fig. 9 differs in the dispositioning of multiplier 5 and adder 3 (and in that the generator of Fig. 9 has only one index register (INDEX) 2). Explanation will be given again, referring to the example of Fig. 5. In Fig. 9, the same reference numerals designate parts similar to those in Fig. 6. The values of c (=11) and distance D (=3) are set respectively in a delta register 1 and a distance register 4. To the value of c an index sent from the index register 2 is added in an adder 3, and the result is fed back to the index register 2 to replace the former index therein. The index register 2 is set to 0 as a starting condition. So, the output of the adder 3 becomes successively 0, 11, 22, 33, 44, 55, .....

The distance value D (=3) set in the distance register 4, and the outputs of the adder 3 are multiplied together by the multiplier 5, producing successive outputs of 0, 33, 66, 99, 132 .... These values are corrected (replaced by a modulus form) by the address correction circuits 10, as described above. So, the output of the address correction circuit 10 becomes, successively, 0, 33, 18, 3, 36 .... To these values, the start address (=0 in this example) is added by the adder 7 to provide the required addresses, 0, 33, 18, 3, 36 .... When these values are expressed in hexa-decimal numerals, they become 0, 21, 12, 3, 24 ... as shown in Fig. 5.

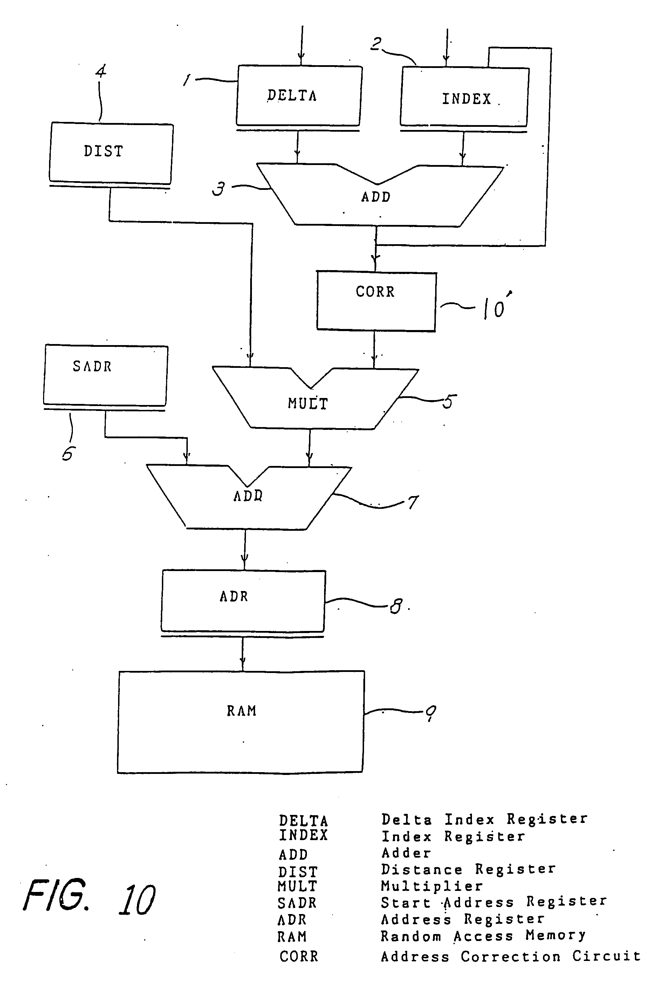

Fig. 10 shows a modification of the address generator of Fig. 9, in accordance with another embodiment of the present invention. Comparing this system with that of Fig. 9, the address correction circuit 10ʹ is positioned between the adder 3 and the multiplier 5. The same reference numerals designate items similar to those in Fig. 9. In the generator of Fig. 10, the outputs of the adder 3 are corrected, that is replaced by the modulo from. It will by understood easily by the person skilled in the art that the arrangement of Fig. 10 provides the same addresses to those provided by Fig. 9. The outputs of the adder 7 are registered in an address register 8, and the memory 9 is accessed in accordance with address numbers given from the address register 8.

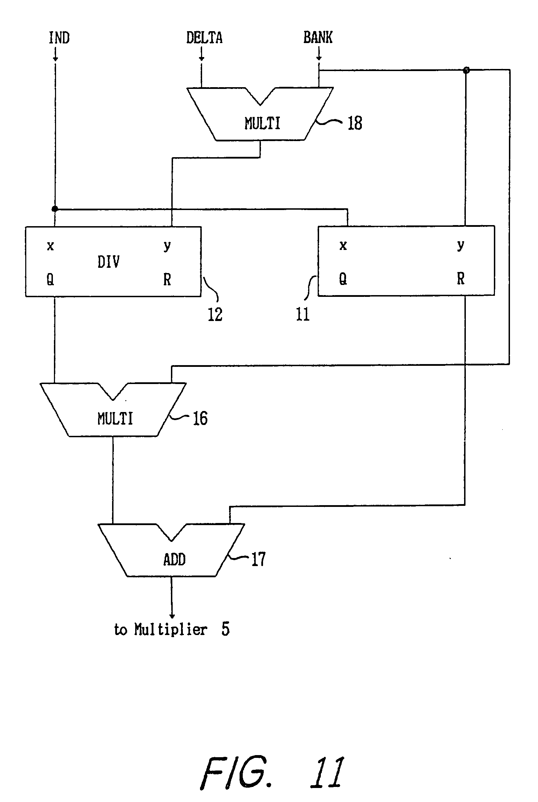

In the generator of Fig. 10, the correction circuit 10ʹ should be modified as shown in Fig. 11. Compared with the correction circuit of Fig. 8, multipliers 13 and 15 are eliminated and replaced by a single multiplier 18. Other circuit elements are the same to those of Fig. 8. Operations will be easily understood by analogy with the arrangements described above.

So, in a manner described above, a vector address is accessed in order of memory bank index and, therefore, no waiting time is necessary for the processor, because the necessary addresses are generated successively in order of bank index. Thus, a quick access to a distanced vector address can be attained.

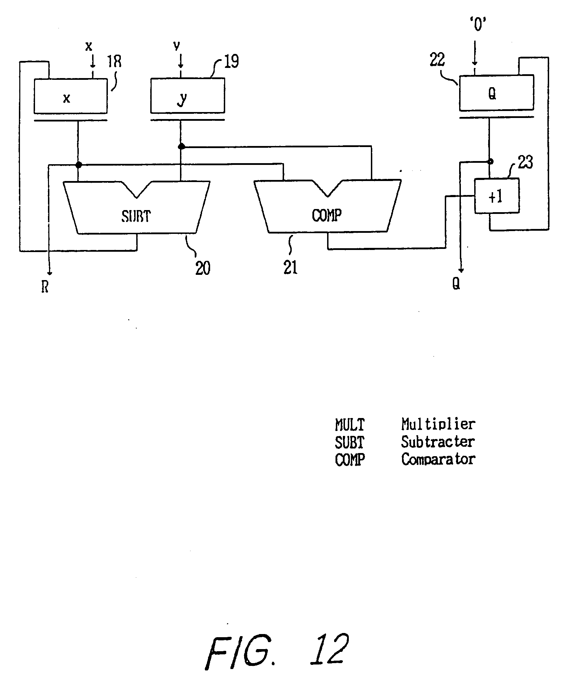

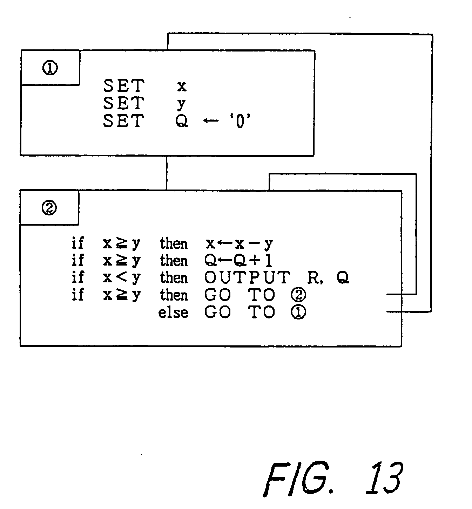

An index correction circuit 10 or 10ʹ described above comprises a divider circuit which calculates the equations (3), or (5). Any circuit which performs such operation may by used in place of the circuits described. An example is shown in Fig. 12. In an x register 18 and y register 19 are respectively set the values of x and y. As can be seen in Fig. 12, the divider circuit is fundamentally composed of a subtractor (SUBT) 20, a comparator (COMP) 21 and a counter circuit 22. The values of x and y are compared in the comparator 21. If x is smaller than y, then x is equal to R, and if x is larger than or equal to y, then y is subtracted from x by the subtractor 20, and the output of the subtractor 20 is fed back to the x register 18, and replaces the former x value. The counter 22 is set first to zero, and the count increased by 1, by a plus one generator 23, each time the comparator 21 detects that x is larger than or equal to y. In such manner, the process is repeated until the value in the x register becomes smaller than y. The value remaining in the x register 18 is equal to the remainder R, and the value in the counter gives the quotient Q. A flow chart for this divider circuit is given in Fig. 13.

The overall circuit of an address generator in accordance with an embodiment of the invention is shown in Fig. 14. The left side half of the Figures is equivalent to the circuit of Fig. 10. The reference numerals, therefore, correspond to those of Fig. 10. Request Address Register (RADR) 8 corresponds to address register (ADR) 8 in Fig. 10, and Index Adder (IADD) 3 corresponds to adder (ADD) 3 in Fig. 10. A minor modification will be noticed at the input side of the multiplier 5. Namely, in Fig. 10, the input of the multiplier 5 is connected to the output side of the correction circuit 10ʹ, but in Fig. 14, the input of the multiplier 5 is supplied from the index register (INDEX or simply IND) 2. It will be understood by those skilled in the art that this difference is not a difference of substance, it relates only to the timing techniques used. In the disclosure which follows explanation will be given with respect to the flow of data, and discussion of timing will be omitted for the sake of simplicity.

In the right half side of the Figure are provided a length register (LENGTH) 24 and a request counter (REQ CNTR or simply REQ) 25. To these registers is set the length of the vector address, that is a number corresponding to the difference of the indices between the end address and the starting address of the vector address. Referring to the example of Fig. 7, if the required data items are those having addresses from 0 to 200, the number 41 is set in LENGTH. If the starting address is 10 and the end address is 200, then the length should by 39. At each cycle of the index adder (IADD) 3, the IND (index, from index register 2) is compared with the LENGTH by a comparator 26. If IND is smaller than or equal to the LENGTH, then the comparator 26 outputs 1, and the value 1 is stored in a request valid register (RVAL or simply VAL) 29. If IND is larger than LENGTH, then the comparator 26 outputs 0, and the value in VAL is set to 0. When VAL is 1, a decrementor 27 outputs -1 and this value is fed back to the request counter 25. In such a manner, the value REQ in the request counter is reduced by 1 each time the index generator 2 outputs a new index. As the output of the INDEX increases, and when it exceeds the LENGTH, VAL becomes 0. When VAL is 0 and REQ becomes 0 a zero detector (ZERO DETECT) 28 detects this, and sends a signal to the memory control unit (not shown) to stop the process of address generation. The memory control unit is a common unit provided for all of the memory devices for controlling overall operation of the memory device.

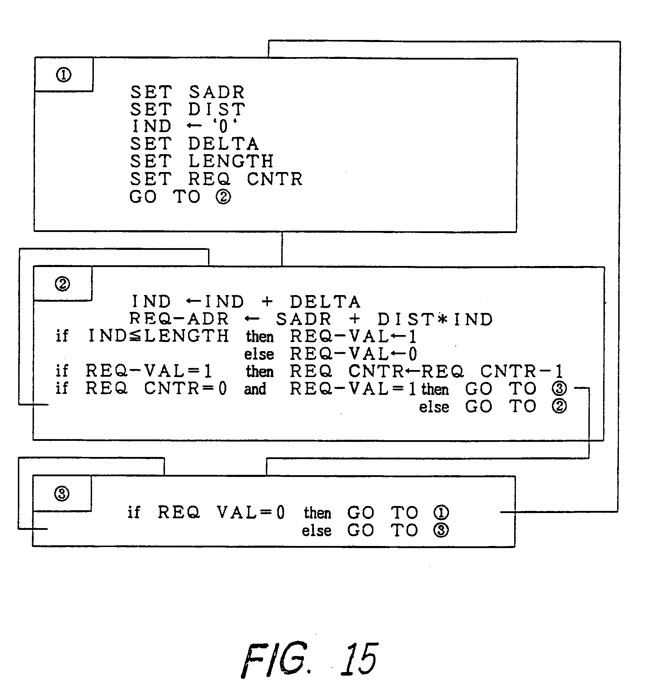

A flow chart illustrating the above process is shown in Fig. 15. In a step one, which is denoted by an encircled number 1, the start address SADR, distance DIST, delta DELTA and length LENGTH are set. IND is set to "0" for example and the request counter 25 is also set. Initial values for relevant registers are thus set. In step two which is denoted by an encircled number 2, an addition process is performed in IADD 3. In a step three denoted by an encircled number 3 a decision is made either to continue the process or to end the process, and enable reception of a next request from a processor (not shown).

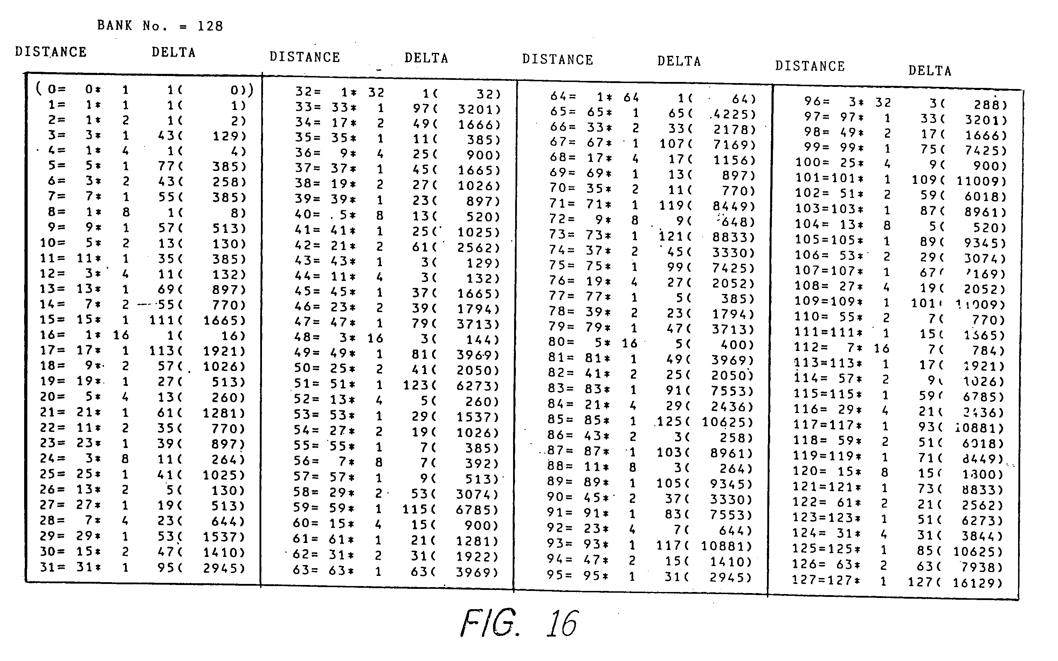

From the above explanation, it will be understood that the delta index c can be obtained by calculation as a solution of equation (2). The calculation is neither difficult nor troublesome. However, it is practical to use a (pre-prepared) "chart" indicating the values of c for various distance values D. An example of such a DISTANCE - DELTA chart is shown in Fig. 16. Since the bank number B is pre-determined for each memory device, one chart is sufficient for each memory device. If such a chart is prepared for a memory device to be used, it is possible to obtain the value of c when the distance D is given in a programming step.

Fig. 16 is an example of a DISTANCE - DELTA chart for a computer having 128 banks, that is B = 128. In the chart, the first column in each row entry indicates the distance number D. The value D is factorized by 2ⁿ, and shown in the second column of the entry. For example, at the row entry for D = 24 it is shown that 24 is equal to 3x 8 (=2³). The asterisk * means multiplication. In the third column in each row entry the delta index c is shown. For example, in row D = 34, a c value of 49 is given. Values of c can be obtained very quickly from such a chart. So, programming becomes very easy. In the fourth column of each row entry, in brackets the value of D x c is shown as an aid to consideration. This is a number to be added to an address index in order to obtain a next address index which is included in the next larger (bank) indexed bank.

Further, and practically, a DISTANCE - DELTA chart may be memorized in a memory device. So, in programming it is not necessary to go over the DISTANCE - DELTA chart, when bank number B and distance D is given in the program, a subroutine of the program can look over the chart to find the delta index c and then generate requested address numbers in a manner as described above.

In the foregoing description, it has been assumed that the values B and D are coprime to each other. However, embodiments of the present invention can easily be applied in cases in which B and D are not coprime to each other. It becomes apparent by testing for both cases, that if the value of D is modified, constant stride access can be accomplished with great benefits in terms of access throughput.

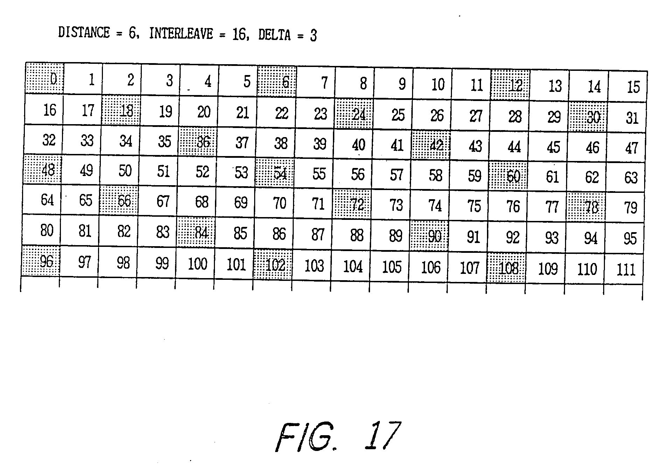

This will be explained with respect to a case in which interleave B = 16 and distance D = 6, for example, Relevant addresses are illustrated in Fig. 17, identified by shading. As can be seen in the Figure, the desired addresses are positioned in banks whose indexes differ by two. In this case, distance 6 can be expressed as 3 x 2. Since 3 is coprime with 8, delta is found to be 3, because

$\text{3 x 3 = 1 x 8 + 1 = 1(mod 8)}$

so,

$\text{6 x 3 = 16 + 2 = 2(mod 16)}$

This means that, if the address index is increased by 6 x 3 = 18, the bank number is increased by 2. Therefore, if the values B = 16, c = 3 and D = 6 are provided, the address generator described above will output the addresses identified by shading as shown in Fig. 17. In this example, constant stride access throughput is improved by approximately a factor of three in comparison with a case in which a contiguous type vector access is made. This is apparent because within a time period during which a previously proposed contiguous access method accesses address 0 and is waiting for access to address 6, the embodiment of the present invention accesses three addresses 0, 18 and 36.

It will be understood that, generally when B and D are not coprime to each other, there is a greatest common measure (factor) G for B and D. So, B and D can be expressed respectively as

$\text{B = G x B'}$

and

$\text{D = G x D'}$

using B' and D', equation (2) can be modified as

$\text{C x D' = 1(mod B') (2')}$

Thus, it will be apparent that an address generator operating in accordance with the rule of equation (2), where B and D are coprime to each other, is applicable without any modification to a case in which B and D are not coprime to each other, if the modified values B' and D' are used.

The above process can be generalized using a DISTANCE - DELTA chart as follows, referring to Fig. 16. When distance is given, find the value of delta (c) in the row corresponding to the distance. For example, if D = 50, then it will be found that c = 41.

As a special case, it will be noticed from the chart that for some values of distance, for example 2, 4, 8, 16 etc., the value of delta becomes 1. In such cases, it will be understood that the addresses are all, in effect, vertically aligned in several columns. In such special cases, embodiments of the present invention do not offer particular advantages but, on the other hand the total access time even for such "worst cases" is never longer than that required in previous proposals. It should be further noticed, that it is common sense in terms of advanced programming technology to avoid designing a program using a distance value of 2ⁿ in order to arrange the necessary addresses in a column. So, in normal cases, embodiments of the present invention provide a significant advantage over previous proposals.

Further, it will be apparent, by checking output indices for practical cases, that the distanced vector access as provided by embodiments of the present invention is applicable to memory devices wherein memory banks are group controlled, without any device modification.

In the above description, circuit elements referred to, multipliers, registers, counters etc. are all conventional and are available on the market as IC packages. Therefore, it is not necessary to use any special circuit elements to implement circuitry in accordance with an embodiment of the invention. Nonetheless throughput of a memory device can be improved very much compared to previous proposals.

Embodiments of the present invention provide a method and means for generating addresses for a distanced vector address or a constant stride vector address. The address generator generates requested address indices following an equation

$\text{c.D = 1(mod B)}$

where B is the bank number of the memory device, D is the distance or stride of the vector address and c is a positive integer called the delta index. The requested addresses are successively generated in order of bank addresses of a memory device which stores the vector address. So, waiting time which has been necessary for skipping over banks from one address to a next address in previously proposed distanced vector access methods has been eliminated. The throughput of the memory device is improved.

Embodiments of the present invention provide apparatus or method for performing a constant stride vector access to a constant stride vector address, having a starting address index and having a stride D, of a memory device having a plurality of memory banks, B in number, designated by respective bank indices and with individual address locations designated by address indices interleaved across the memory banks, wherein
(a) when B and D are coprime, a number c is determined which satisfies :-

   $\text{c x D = 1(mod B)}$

   where c is a positive integer called a delta index, or
(b) when B and D are not coprime, the number c is determined which satisfies :-

   $\text{c x Dʹ = 1(mod Bʹ)}$

   where

   $\text{B = G x Bʹ}$

   and

   $\text{D = G x Dʹ,}$

   G being the greatest common factor of B and D.

Using c, a series of address indexes are generated derived from numbers of the series

$\text{n x c x D}$

where n is 0, 1, 2, 3 ...etc., and the starting address added thereto, so that the successively generated address indexes relate to successively accessible banks.

The numbers of the series n x c x D are not used directly but are corrected, i.e. they are subject to or referred to a modulus, so that the corrected numbers wrap around from a maximum value B x D to 0 (zero). In this way a "basic" series of address indexes (from 0 to B x D) is provided. Address indexes above B x D are provided by adding multiples of B x D to the basic series of address indexes.

Correction as mentioned above may be effected as follows:-
either
(i) c x D is determined, and subjected to cumulative addition to provide numbers 1 x (c x D), 2 x (c x D)...etc., or
(ii) c is cumulatively added, to provide numbers 1 x c, 2 x c ... etc., or
(iii) D is cumulatively added, to provided numbers 1 x D, 2 x D ... etc..

Then either,
(A) in case (i) the numbers provided, or in case (ii) or (iii) the numbers provided multiplied by D (in case ii) and c (in case iii) are subject to correction of a form

   $\text{I = R (mod B x D)}$

   where R refers to corrected numbers and I to uncorrected numbers, to provide the basic series of address indexes, or
(B) in case (ii) or case (iii) the numbers provided are subject to correction of a form

   $\text{I = R (mod B),}$

   then the corrected numbers R multiplied by D (case ii) or c (case iii), to provide the basic series of address indexes.

## Claims

1. Apparatus operable to perform a constant stride vector access to a constant stride vector address of a memory device, the vector address having a starting address and a distance or stride, the memory device having a plurality of memory banks numbered with respective bank indices, and individual addresses of the memory device being numbered with respective address indices interleaved through the memory banks, the apparatus including an address generator, operable to generate successive address indices of the constant stride vector address, comprising:
generating means (1, 2, 2', 3, 4, 5) for generating a sequence of first numbers of which the first one is zero and which differ from each another by a value computed in accordance to an equation
$\text{c x D = 1 (mod B)}$
where B and D are positive integers coprime to each other, B being the number of banks of the memory device and D being the said distance or stride of the vector address, or B being the number of banks and D the stride after division by the greatest common factor of the number of banks and the stride, and c being a positive integer called a delta index;
correction means (10) operable such that said address indices are generated on the basis of said first numbers referred to modulus B x D; and
adding means (7) coupled to said correction means and to a starting address index register (6) so that the generated address indices are based on the starting address index.

2. Apparatus as claimed in claim 1, wherein the generating means comprise:
a multiplier (5) operable to multiply together the value of D and the delta index c; and
an adder (3) operable to generate the said first numbers by successive cumulative additions of the output value provided by the multiplier.

3. Apparatus as claimed in claim 1, wherein the generating means comprise:
an adder (3) operable to output numbers generated by successive cumulative additions of the delta index c; and
a multiplier (5) operable to multiply the numbers output by the adder by D, to generate the said first numbers.

4. Apparatus as claimed in claim 1, 2 or 3, wherein the correction means (10, 10') are operable to replace the said first numbers generated by said generating means by numbers represented by R in the equation
$\text{X = R (mod(B x D))}$
where X is a number generated by the generating means, the numbers represented by R being supplied to the adding means (7) to have the starting address added thereto to provide said address indices.

5. Apparatus as claimed in claim 4, wherein the correction means comprises first and second dividers, each of which is operable to carry out the operation:-
$\text{x ÷ y = Q and R}$
where x, y, Q and R are integers, and Q is a quotient and R is a remainder, and
the first divider is arranged to receive at its x terminal the said first numbers generated by the generating means, and to receive at its y terminal a value B x D,
the second divider is arranged to receive at its x terminal the said first numbers generated by the generating means, and to receive at its y terminal a value B x D x c,
and the output value at the Q terminal of the second divider is multiplied together with the value B x D and then added to the output at the R terminal of the first divider.

6. Apparatus as claimed in claim 3, wherein the correction means (10') are operable to replace the numbers output from the adder (3) by numbers represented by R' in the equation:-
$\text{X' = R'(mod B)}$
where X' is a number output from the adder (3).

7. Apparatus as claimed in claim 6, wherein the correction means comprises first and second dividers, each of which is operable to carry out the operation:-
$\text{x ÷ y = Q and R}$
where x, y, Q and R are integers, and Q is a quotient and R is a remainder, and
the first divider is arranged to receive at its x terminal the numbers output from the adder (3), and to receive at its y terminal a value B,
the second divider is arranged to receive at its x terminal the numbers output from the adder (3), and to receive at its y terminal a value B x D,
and the output value at the Q terminal of the second divider is multiplied together with the value B and then added to the output at the R terminal of the first divider.

8. A method of performing a constant stride vector access to a constant stride vector address of a memory device, the vector address having a starting address and a distance or stride, the memory device having a plurality of memory banks numbered with respective bank indices, and individual addresses of the memory device being numbered with respective address indices interleaved through the memory banks, the method comprising generating successive address indices of the constant stride vector address, by:-
(a) generating a sequence of first numbers of which the first one is zero and which differ from each another by a value computed in accordance to an equation
$\text{c x D = 1 (mod B)}$
where B and D are positive integers coprime to each other, B being the number of banks of the memory device and D being the said distance or stride of the vector address, or B being the number of banks and D the stride after division be the greatest common factor of the number of banks and the stride, and c being a positive integer called a delta index;
(b) effecting correction such that said address indices are generated on the basis of said first numbers referred to modulus B x D; and
(c) adding a value based on the starting address index so that the generated address indices are based on the starting address index.

9. A method as claimed in claim 8, wherein said first numbers are the numbers Iₙ for each value of n, where
${\text{I}}_{\text{n}} \text{= n(c x D)}$
and n is an integer,
and wherein
the first numbers Iₙ are replaced by second numbers Rₙ having a relation with Iₙ expressed by
${\text{I}}_{\text{n}} {\text{= R}}_{\text{n}} \text{(mod (B x c x D))}$
and wherein
the starting address is added to Rₙ.

10. A method as claimed in claim 8, wherein said first numbers are the numbers I'ₙ for each value of n, where
${\text{I'}}_{\text{n}} \text{= nc}$
and n is an integer,
and wherein
the first numbers I'ₙ are replaced by second numbers R'ₙ having a relation with I'ₙ expressed by
${\text{I'}}_{\text{n}} {\text{= R'}}_{\text{n}} \text{(mod (B)}$
and wherein
R'ₙ is multiplied by D,
and
the starting address is added to the value R'ₙ x D so obtained.

## Patentansprüche

1. Vorrichtung, die betreibbar ist, um einen Konstantschritt-Vektorzugriff auf eine Konstantschritt-Vektoradresse einer Speichervorrichtung durchzuführen, wobei die Vektoradresse eine Startadresse und einen Abstand oder Schritt aufweist, die Speichervorrichtung eine Mehrzahl von mit entsprechenden Bankindizes numerierten Speicherbänken aufweist und einzelne Adressen der Speichervorrichtung mit entsprechenden Adreßindizes numeriert sind, die durch die Speicherbänke hindurch verschachtelt sind, wobei die Vorrichtung einen Adreßgenerator umfaßt, der betreibbar ist, um aufeinanderfolgende Adreßindizes der Konstantschritt-Vektoradresse zu erzeugen, umfassend:
Erzeugungsmittel (1, 2, 2', 3, 4, 5) zur Erzeugung einer Sequenz von ersten Zahlen, von denen die erste Null ist und welche sich voneinander durch einen Wert unterscheiden, der gemäß einer Gleichung
$\text{c x D = 1 (mod B)}$
berechnet ist, wobei B und D positive, zueinander teilerfremde ganze Zahlen sind, B die Bänkeanzahl der Speichervorrichtung ist und D der Abstand oder Schritt der Vektoradresse ist oder B die Bänkeanzahl und D der Schritt nach Division durch den größten gemeinsamen Faktor der Bänkeanzahl und des Schritts und c eine Deltaindex genannte positive ganze Zahl ist;
Korrekturmittel (10), die derart betreibbar sind, daß die Adreßindizes mit Bezug auf Modulus B x D auf der Grundlage der ersten Zahlen erzeugt werden; und
Additionsmittel (7), das an die Korrekturmittel und an ein Startadreßindexregister (6) so angekoppelt ist, daß die erzeugten Adreßindizes auf dem Startadreßindex basieren.

2. Vorrichtung nach Anspruch 1, bei der die Erzeugungsmittel umfassen:
einen Multiplizierer (5), der betreibbar ist, um den Wert von D und den Deltaindex c miteinander zu multiplizieren; und
einen Addierer (3), der betreibbar ist, um die ersten Zahlen durch aufeinanderfolgende kumulative Additionen des durch den Multiplizierer bereitgestellten Ausgangswerts zu erzeugen.

3. Vorrichtung nach Anspruch 1, bei der die Erzeugungsmittel umfassen:
einen Addierer (3), der betreibbar ist, um Zahlen auszugeben, die durch aufeinanderfolgende kumulative Additionen des Deltaindex c erzeugt werden; und
einen Multiplizierer (5), der betreibbar ist, um die Zahlen, die vom Addierer ausgegeben werden, mit D zu multiplizieren, um die ersten Zahlen zu erzeugen.

4. Vorrichtung nach Anspruch 1, 2 oder 3, bei der die Korrekturmittel (10, 10') betreibbar sind, um die durch die Erzeugungsmittel erzeugten ersten Zahlen durch Zahlen zu ersetzen, die durch R in der Gleichung
$\text{X = R (mod(B x D))}$
dargestellt sind, worin X eine durch die Erzeugungsmittel erzeugte Zahl ist, wobei die durch R dargestellten Zahlen dem Additionsmittel (7) zugeführt werden, damit die Startadresse dazu addiert wird, um die Adreßindizes bereitzustellen.

5. Vorrichtung nach Anspruch 4, bei der das Korrekturmittel einen ersten und zweiten Dividierer umfaßt, von denen jeder betreibbar ist, um die Operation:-
$\text{x ÷ y = Q und R}$
auszuführen, wobei x, y, Q und R ganze Zahlen sind und Q ein Quotient ist und R ein Rest ist und
der erste Dividierer angeordnet ist, um an seinem x-Anschluß die durch die Erzeugungsmittel erzeugten ersten Zahlen zu empfangen und an seinem y-Anschluß einen Wert B x D zu empfangen,
der zweite Dividierer angeordnet ist, um an seinem x-Anschluß die durch die Erzeugungsmittel erzeugten ersten Zahlen zu empfangen und an seinem y-Anschluß einen Wert B x D x c zu empfangen,
und der Ausgangswert am Q-Anschluß des zweiten Dividierers mit dem Wert B x D multipliziert wird und dann zur Ausgangsgröße am R-Anschluß des ersten Dividierers addiert wird.

6. Vorrichtung nach Anspruch 3, bei der die Korrekturmittel (10') betreibbar sind, um die von dem Addierer (3) ausgegebenen Zahlen durch Zahlen zu ersetzen, die durch R' in der Gleichung:-
$\text{X' = R' (mod B)}$
dargestellt sind, wobei X' eine Zahlen-Ausgangsgröße des Addierers (3) ist.

7. Vorrichtung nach Anspruch 6, bei der das Korrekturmittel einen ersten und zweiten Dividierer umfaßt, von denen jeder betreibbar ist, um die Operation:-
$\text{x ÷ y = Q und R}$
auszuführen, wobei x, y, Q und R ganze Zahlen sind und Q ein Quotient ist und R ein Rest ist und
der erste Dividierer angeordnet ist, um an seinem x-Anschluß die vom Addierer (3) ausgegebenen Zahlen zu empfangen und an seinem y-Anschluß einen Wert B zu empfangen,
der zweite Dividierer angeordnet ist, um an seinem x-Anschluß die vom Addierer (3) ausgegebenen Zahlen zu empfangen und an seinem y-Anschluß einen Wert B x D zu empfangen,
und der Ausgangswert am Q-Anschluß des zweiten Dividierers mit dem Wert B multipliziert wird und dann zur Ausgangsgröße am R-Anschluß des ersten Dividierers addiert wird.

8. Verfahren zur Durchführung eines Konstantschritt-Vektorzugriffs auf eine Konstantschritt-Vektoradresse einer Speichervorrichtung, wobei die Vektoradresse eine Startadresse und einen Abstand oder Schritt aufweist, die Speichervorrichtung eine Mehrzahl von mit entsprechenden Bankindizes numerierten Speicherbänken aufweist und einzelne Adressen der Speichervorrichtung mit entsprechenden Adreßindizes numeriert sind, die durch die Speicherbänke hindurch verschachtelt sind, wobei das Verfahren die Erzeugung von aufeinanderfolgenden Adreßindizes der Konstantschritt-Vektoradresse umfaßt, durch:-
(a) Erzeugen einer Sequenz von ersten Zahlen, von denen die erste Null ist und welche sich voneinander durch einen Wert unterscheiden, der gemäß einer Gleichung
$\text{c x D = 1 (mod B)}$
berechnet ist, wobei B und D positive, zueinander teilerfremde ganze Zahlen sind, B die Bänkeanzahl der Speichervorrichtung ist und D der Abstand oder Schritt der Vektoradresse ist oder B die Bänkeanzahl und D der Schritt nach Division durch den größten gemeinsamen Faktor der Bänkeanzahl und des Schritts und c eine Deltaindex genannte positive ganze Zahl ist;
(b) Bewirken einer Korrektur derart, daß die Adreßindizes mit Bezug auf Modulus B x D auf der Grundlage der ersten Zahlen erzeugt werden; und
(c) Addieren eines Werts, der auf dem Startadreßindex basiert, so daß die erzeugten Adreßindizes auf dem Startadreßindex basieren.

9. Verfahren nach Anspruch 8, bei dem die ersten Zahlen die Zahlen Iₙ für jeden Wert von n sind, wobei
${\text{I}}_{\text{n}} \text{= n(c x D)}$
und n eine ganze Zahl ist,
und worin
die ersten Zahlen Iₙ durch zweite Zahlen Rₙ ersetzt werden, die eine Beziehung zu Iₙ aufweisen, die durch
${\text{I}}_{\text{n}} {\text{= R}}_{\text{n}} \text{(mod (B x c x D))}$
ausgedrückt wird,
und worin
die Startadresse zu Rₙ addiert wird.

10. Verfahren nach Anspruch 8, bei dem die ersten Zahlen die Zahlen I'ₙ für jeden Wert von n sind, wobei
${\text{I'}}_{\text{n}} \text{= nc}$
und n eine ganze Zahl ist,
und worin
die ersten Zahlen I'ₙ durch zweite Zahlen R'ₙ ersetzt werden, die eine Beziehung zu I'ₙ aufweisen, die durch
${\text{I'}}_{\text{n}} {\text{= R'}}_{\text{n}} \text{(mod (B))}$
ausgedrückt wird,
und worin
R'ₙ mit D multipliziert wird,
und
die Startadresse zu dem so erhaltenen Wert R'ₙ x D addiert wird.

## Revendications

1. Appareil pouvant fonctionner pour réaliser un accès vectoriel à pas constant sur une adresse vectorielle à pas constant d'un dispositif de mémoire, l'adresse vectorielle présentant une adresse de début et une distance ou pas, le dispositif de mémoire comportant une pluralité de batteries de mémoires numérotées à l'aide d'index de batterie respectifs et des adresses individuelles du dispositif de mémoire étant numérotées à l'aide d'index d'adresse respectifs entrelacés sur les batteries de mémoires, l'appareil incluant un générateur d'adresses pouvant fonctionner pour générer des index d'adresse successifs de l'adresse vectorielle à pas constant, comprenant :
un moyen de génération (1, 2, 2', 3, 4, 5) pour générer une séquence de premiers nombres dont le premier vaut zéro et qui diffèrent les uns des autres d'une valeur calculée conformément à une équation :
$\text{c x D = 1 (mod B)}$
où B et D sont des entiers positifs en congruence mutuelle, B étant le nombre de batteries du dispositif de mémoire et D étant ladite distance ou ledit pas de l'adresse vectorielle ou B étant le nombre de batteries et D étant le pas après division par le plus grand commun dénominateur du nombre de batteries et du pas et c étant un entier positif appelé index delta ;
un moyen de correction (10) fonctionnant de telle sorte que lesdits index d'adresse soient générés sur la base desdits premiers nombres rapportés au modulo B x D ; et
un moyen d'addition (7) couplé audit moyen de correction et à un registre d'index d'adresse de début (6) de telle sorte que les index d'adresse générés soient basés sur l'index d'adresse de début.

2. Appareil selon la revendication 1, dans lequel le moyen de génération comprend :
un multiplieur (5) qui fonctionne pour multiplier ensemble la valeur de D et l'index delta c ; et
un additionneur (3) qui fonctionne pour générer lesdits premiers nombres au moyen d'additions cumulatives successives de la valeur de sortie produite par le multiplieur.

3. Appareil selon la revendication 1, dans lequel le moyen de génération comprend :
un additionneur (3) qui fonctionne pour émettre en sortie des nombres générés au moyen d'additions cumulatives successives de l'index delta c ; et
un multiplieur (5) qui fonctionne pour multiplier les nombres émis en sortie par l'additionneur par D afin de générer lesdits premiers nombres.

4. Appareil selon la revendication 1, 2 ou 3, dans lequel le moyen de correction (10, 10') peut fonctionner pour remplacer lesdits premiers nombres générés par ledit moyen de génération par les nombres représentés par R dans l'équation :
$\text{X = R (mod(B x D))}$
où X est un nombre généré par le moyen de génération, les nombres représentés par R étant appliqués au moyen d'addition (7) pour obtenir l'adresse de début qui leur est ajoutée pour produire lesdits index d'adresse.

5. Appareil selon la revendication 4, dans lequel le moyen de correction comprend des premier et second diviseurs dont chacun peut fonctionner pour mettre en oeuvre l'opération :
$\text{x / y = Q et R}$
où x, y, Q et R sont des entiers, Q est un quotient et R est un reste ; et
le premier diviseur est agencé pour recevoir au niveau de sa borne x lesdits premiers nombres générés par le moyen de génération et pour recevoir au niveau de sa borne y une valeur B x D ;
le second diviseur est agencé pour recevoir au niveau de sa borne x lesdits premiers nombres générés par le moyen de génération et pour recevoir au niveau de sa borne y une valeur B x D x c ; et
la valeur de sortie au niveau de la borne Q du second diviseur est multipliée ensemble avec la valeur B x D puis est additionnée à la sortie au niveau de la borne R du premier diviseur.

6. Appareil selon la revendication 3, dans lequel le moyen de correction (10') peut fonctionner pour remplacer les nombres émis en sortie depuis l'additionneur (3) par les nombres représentés par R' dans l'équation :
$\text{X' = R' (mod B)}$
où X' est un nombre émis en sortie depuis l'additionneur (3).

7. Appareil selon la revendication 6, dans lequel le moyen de correction comprend des premier et second diviseurs dont chacun peut fonctionner pour mettre en oeuvre l'opération :
$\text{x / y = Q et R}$
où x, y , Q et R sont des entiers, Q est un quotient et R est un reste ; et
le premier diviseur est agencé pour recevoir au niveau de sa borne x les nombres émis en sortie depuis l'additionneur (3) et pour recevoir au niveau de sa borne y une valeur B ;
le second diviseur est agencé pour recevoir au niveau de sa borne x les premiers nombres émis en sortie depuis l'additionneur (3) et pour recevoir au niveau de sa borne y une valeur B x D ; et
la valeur de sortie au niveau de la borne Q du second diviseur est multipliée ensemble avec la valeur B puis est additionnée à la sortie au niveau de la borne R du premier diviseur.

8. Procédé de réalisation d'un accès vectoriel à pas constant à une adresse vectorielle à pas constant d'un dispositif de mémoire, l'adresse vectorielle présentant une adresse de début et une distance ou pas, le dispositif de mémoire comportant une pluralité de batteries de mémoires numérotées à l'aide d'index de batterie respectifs, et des adresses individuelles du dispositif de mémoire étant numérotées à l'aide d'index d'adresse respectifs entrelacés sur les batteries de mémoires, le procédé comprenant la génération d'index d'adresse successifs de l'adresse vectorielle à pas constant en :
(a) générant une séquence de premiers nombres dont le premier vaut zéro et qui diffèrent les uns des autres d'une valeur calculée conformément à une équation :
$\text{c x D = 1 (mod B)}$
où B et D sont des entiers positifs en congruence mutuelle, B étant le nombre de batteries du dispositif de mémoire et D étant ladite distance ou ledit pas de l'adresse vectorielle ou B étant le nombre de batteries et D étant le pas après division par le plus grand commun dénominateur du nombre de batteries et du pas et c étant un entier positif appelé index delta ;
(b) effectuant une correction qui est telle que lesdits index d'adresse sont générés sur la base desdits premiers nombres rapportés au modulo B x D ; et
(c) additionnant une valeur basée sur l'index d'adresse de début de telle sorte que les index d'adresse générés soient basés sur l'index d'adresse de début.

9. Procédé selon la revendication 8, dans lequel lesdits premiers nombres sont les nombres Iₙ pour chaque valeur de n où
${\text{I}}_{\text{n}} \text{= n (c x D)}$
et n est un entier
et dans lequel
les premiers nombres Iₙ sont remplacés par des seconds nombres Rₙ liés par une relation Iₙ exprimée par :
${\text{I}}_{\text{n}} {\text{= R}}_{\text{n}} \text{(mod (B x c x D))}$
et dans lequel
l'adresse de début et additionnée à Rₙ.

10. Procédé selon la revendication 8, dans lequel lesdits premiers nombres sont les nombres I'ₙ pour chaque valeur de n où
${\text{I'}}_{\text{n}} \text{= n c}$
et n est un entier
et dans lequel
les premiers nombres I'ₙ sont remplacés par des seconds nombres R'ₙ liés par une relation I'ₙ exprimée par :
${\text{I'}}_{\text{n}} {\text{= R'}}_{\text{n}} \text{(mod B)}$
et dans lequel
R'ₙ est multiplié par D ; et
l'adresse de début est additionnée à la valeur R'ₙ x D ainsi obtenue.
